Europäisches Patentamt

European Patent Office

Office européen des brevets

(19)

(11) Publication number: **0 103 342**
**B1**

(12) **EUROPEAN PATENT SPECIFICATION**

(45) Date of publication of patent specification: **10.08.88**

(51) Int. Cl.⁴: **A 01 G 9/02, A 01 G 9/24**

(21) Application number: **83201314.8**

(22) Date of filing: **13.09.83**

(54) Cultivating trough made from metal.

(30) Priority: **14.09.82 NL 8203571**

(43) Date of publication of application:
**21.03.84 Bulletin 84/12**

(45) Publication of the grant of the patent:
**10.08.88 Bulletin 88/32**

(84) Designated Contracting States:
**AT BE CH DE FR GB IT LI LU NL SE**

(56) References cited:
**WO-A-81/01495**
**DE-A-2 618 275**
**DE-A-2 648 006**
**DE-C- 42 159**
**FR-A- 892 307**
**FR-A-2 481 059**
**US-A-1 213 331**

(73) Proprietor: **Warmtetechniek Frans van Zaal B.V.**
**Vrouwenakker 6**
**NL-1428 RZ Vrouwenakker (Gem. Mijdrecht)**
**(NL)**

(72) Inventor: **Van Zaal, Franciscus Johannes Maria**
**Vrouwenakker 6**
**NL-1428 RZ Vrouwenakker Mijdrecht (NL)**

(74) Representative: **de Vries, Johannes Hendrik**
**Fokke et al**
**Octrooibureau Los en Stigter B.V. P.O. Box**
**20052**
**NL-1000 HB Amsterdam (NL)**

Courier Press, Leamington Spa, England.

## Description

The invention relates to a cultivating trough made from metal for cultivating plants and adapted to be suspended, or to be supported, in a greenhouse, said trough being provided with a trough bottom, two upstanding side walls and at least two tubes being fitted to the trough, which tubes are adapted to be received in a circuit for a heating medium.

Cultivating troughs of this kind are used for cultivating plants, which are e.g. placed in pots on the trough bottom, and are generally manufactured in very large lengths. These cultivating troughs are suspended in a greenhouse or are supported at spaced locations.

Each cultivating trough is provided with its own heating element, which directly heats the cultivating trough. This direct heating of the trough is particularly efficient. Therefore it is possible to work with a lower space temperature in the greenhouse. The cultivating trough functions as it were itself as a heating element for the space heating in the greenhouse. In this manner a considerable saving in energy is achieved, as the special heating system for the space heating in the greenhouse can be dispensed with in many cases.

Due to the large heating surface of the cultivating trough a low temperature, e.g. a temperature of 30°C for the heating medium, generally warm water, may be supplied.

Cultivating troughs of the above-mentioned type are known from FR—A—2,481,059 illustrating a trough made from an isolating material and comprising two longitudinal tubes connected by a number of transverse tubes.

Further US—A—1,213,331 shows a cultivating trough with a false bottom and being made from metal.

It is an object of the present invention to provide an improved construction of the cultivating trough described hereinabove.

To this end the cultivating trough according to the invention is characterized in that one of the tubes is connected at its top with the trough through a slot-shaped passage only.

Because of the slot-shaped connection between the said one tube and the trough only the other tube is received in the circuit for the heating medium, while through said slot-shaped passage a water-fertilizer mixture or the like can be supplied to the plants contained in the trough.

In case that the cultivating trough is made from aluminium or the like material, the tube (tubes) can be integrally extruded with the trough.

The invention will hereafter be elucidated with reference to the drawing, which shows a number of embodiments by way of example of a cultivating trough according to the invention.

Figure 1 is a perspective view of a part of a first embodiment of the cultivating trough according to the invention.

Figures 2 and 3 are perspective views of parts of modified embodiments of the cultivating trough according to Figure 1.

The cultivating troughs for cultivating plants shown in the drawing, which are made from aluminium, are adapted to be suspended in a greenhouse or to be supported at spaced locations. These cultivating troughs are provided with a trough bottom 1, two tubes 2, 4 and two upstanding side walls 3. As an alternative it is also possible to only use one tube 2 or 4.

The tubes 2, 4 are integrally extruded with each cultivating trough. In the embodiments shown by way of example these tubes 2, 4 are positioned underneath the trough bottom, but these tubes can also be formed at other locations of the trough. Of these tubes 2, 4 which may possess any desired cross-section and which may e.g. be round, at least one tube 4 is received in a circuit for a heating medium, in general warm water.

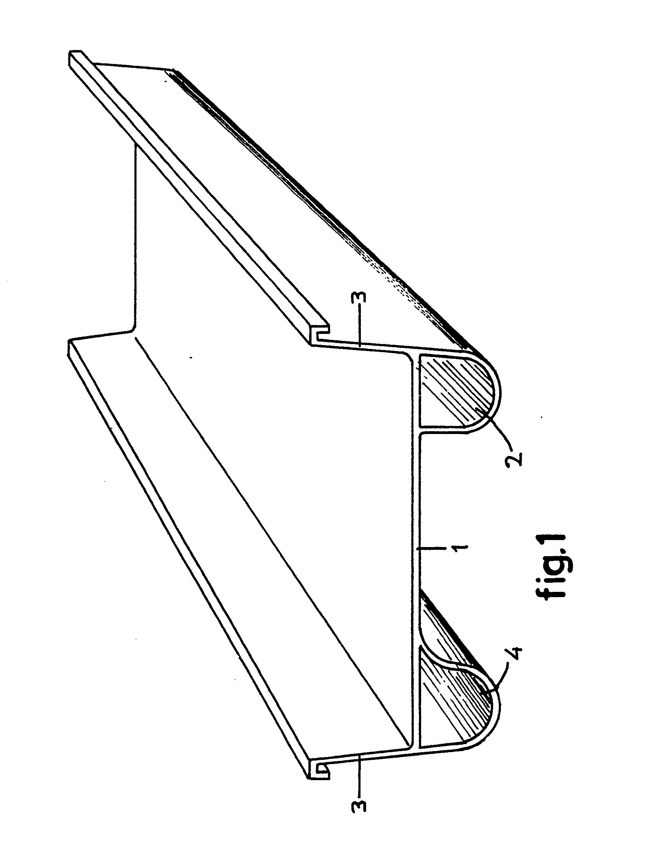

In the embodiment according to Figure 1 the flat trough bottom 1, which extends between the upstanding side walls 3, is of fully closed construction and both tubes 2, 4 are received in the supply stretch and in the return stretch respectively of the circuit for the heating medium. Of course it is also possible to only receive one of the tubes 2, 4 in the circuit for the heating medium and to keep the other tube out of operation.

In this manner a cultivating trough is provided, which is constructed as it were with its own heating means.

The tube or the tubes 2, 4, which is (are) used for this heating, still has (have) a second function, as they increase the rigidity of the cultivating trough at the same time.

Due to the large heating surface of the cultivating trough it is possible to work with a low temperature of the heating medium. This makes it possible to consider the application of sun collectors or earth heat. If desired a heat accumulation system can be combined herewith.

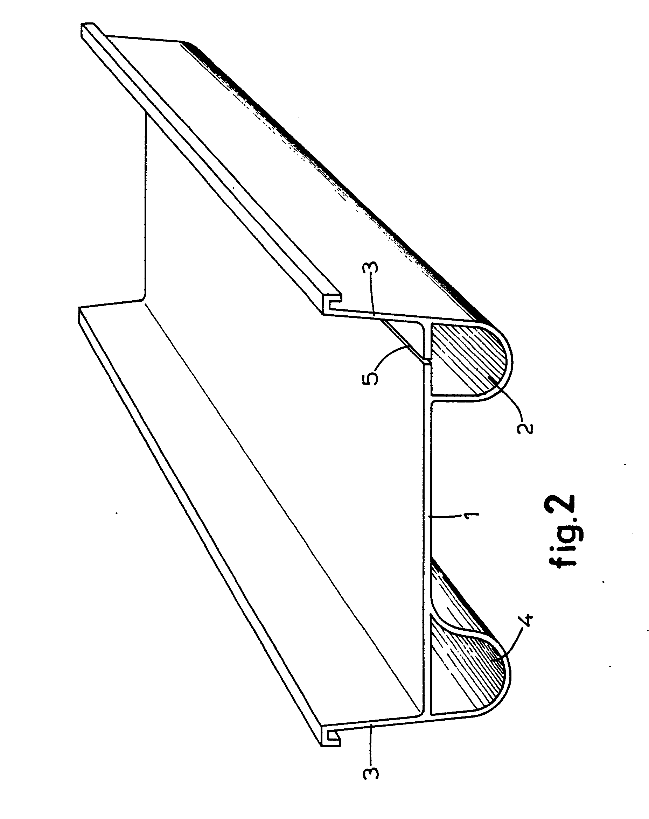

In the embodiment of the cultivating trough according to Figure 2 only the tube 4 is received in the circuit for the heating medium while the tube 2 is connected at its top with the cultivating trough through a slot-shaped passage 5 formed in the trough bottom 1, which passage has a width of e.g. 1 mm. Through this slot-shaped passage 5 the water-fertilizer mixture can be supplied.

With the trough according to the invention a closable discharge opening can be formed in an end partition (not shown) above the trough bottom. Further, because of the applied heating of the trough, evaporation of any fluid left behind in the trough will occur.

The slot-shaped passage 5 may continue through approximately the entire length of the cultivating trough, or may contain interruptions.

As appears from the drawing the tubes 2 and 4 may at least approximately be each other's mirror image.

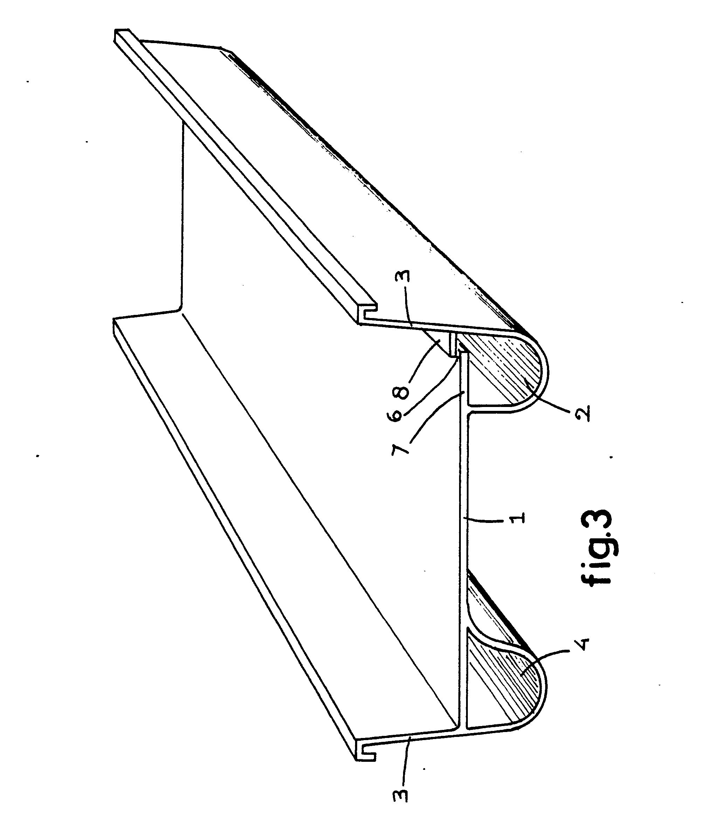

Figure 3 shows still another embodiment of the cultivating trough according to the invention, wherein the slot-shaped passage 6 is defined by at least approximately horizontal strips 7, 8, which connect to the opposite sides of the tube 2 and which are integrally formed with the trough.

The strip 7 forms a part of the trough bottom 1, while the strip 8 lies a slight distance above the surface of the trough bottom 1 and overlaps the strip 7 over a small distance. The slot-shaped passage 6 obtained in this way has a height of e.g. 1 mm.

Instead of the application of the slot-shaped passage 5, as shown in Figure 2, it is also possible to connect the tube 2 at its top with the trough through perforations in the trough bottom only. In this case the trough bottom 1 extends again from the one upstanding side wall 3 to the opposite upstanding side wall 3 and a particularly rigid construction is obtained.

According to a further alternative it is possible to cover the tube 2 at its top with a gauze.

## Claims

1. Cultivating trough made from metal for cultivating plants and adapted to be suspended, or to be supported in a greenhouse, said trough being provided with a trough bottom (1), two upstanding side walls (3) and at least two tubes (2, 4) being fitted to the trough, which tubes (2, 4) are adapted to be received in a circuit for a heating medium, characterized in that one of the tubes (2) is connected at its top with the trough through a slot-shaped passage (5, 6) only.

2. Cultivating trough according to claim 1, characterized in that the trough bottom (1) extends between the upstanding side walls (3) and that the slot-shaped passage (5, 6) is formed in the trough bottom (1).

3. Cultivating trough according to claim 1, characterized in that the slot-shaped passage (6) is defined by at least approximately horizontal strips (7, 8), which are connected to the opposite walls (3) of the respective tube (2) and which are integrally formed with the trough.

4. Cultivating trough according to claim 3, characterized in that the one strip (7) forms a part of the trough bottom (1), while the other strip (8) lies a slight distance above the surface of the trough bottom (1).

5. Cultivating trough according to claim 4, characterized in that both strips (7, 8) overlap each other.

6. Cultivating trough according to claim 1, characterized in that the trough bottom (1) extends from the one upstanding side wall (3) to the other upstanding side wall (3) and that the respective tube (2) is connected at its top with the trough through perforations in this trough bottom (1) only.

7. Cultivating trough according to claim 1, characterized in that the respective tube (2) is covered at its top by a gauze.

## Patentansprüche

1. Kulturgefäss von Metall zum Züchten von Pflanzen, geeignet zum Aufhängen oder Unterstützen in einem Gewächshaus, mit einem Gefässboden (1), zwei senkrechten Seitenwänden (3) und mindestens zwei mit dem Gefäss verbundenen Rohren (2, 4) die aufnehmbar sind in einem Kreis für ein Heizungsmedium, dadurch gekennzeichnet, dass eines der Rohre (2) an seiner Oberseite nur durch eine schlitzförmige Oeffnung (5, 6) mit dem Gefäss verbunden ist.

2. Kulturgefäss nach Ansprüch 1, dadurch gekennzeichnet, dass der Gefässboden (1) sich zwischen den senkrechten Seitenwänden (3) erstreckt und dass die schlitzförmige Oeffnung (5, 6) in dem Gefässboden (1) gebildet ist.

3. Kulturgefäss nach Anspruch 1, dadurch gekennzeichnet, dass die schlitzförmige Oeffnung (6) von zumindest ungefähr waagerechten Streifen (7, 8) definiert wird, die mit den sich gegenüberliegenden Wänden (3) des betreffenden Rohres (2) verbunden sind und die einteilig mit dem Gefäss gebildet sind.

4. Kulturgefäss nach Anspruch 3, dadurch gekennzeichnet, dass der eine Streifen (7) einen Teil des Gefässbodens (1) bildet, während der andere Streifen (8) einigermassen oberhalb des Gefässbodens (1) liegt.

5. Kulturgefäss nach Anspruch 4, dadurch gekennzeichnet, dass beide Streifen (7, 8) sich gegenseitig überlappen.

6. Kulturgefäss nach Anspruch 1, dadurch gekennzeichnet, dass der Gefässboden sich von der einen senkrechten Seitenwand (3) zur anderen senkrechten Seitenwand (3) erstreckt und dass das betreffende Rohr (2) an seiner Oberseite nur durch Perforationen in diesem Boden (1) mit dem Gefäss verbunden ist.

7. Kulturgefäss nach Anspruch 1, dadurch gekennzeichnet, dass das betreffende Rohr (2) an seinen Oberseite von einer Gaze abgedeckt ist.

## Revendications

1. Bac de culture en métal pour la culture des plantes, arrangé d'être suspendu ou supporté dans une serre, ce bac comportant un fond (1), deux parois latérales montantes (3) et au moins deux tubes (2, 4) adaptés au bac, ces tubes (2, 4) étant arrangés à être reçus dans un circuit d'un fluide chauffant, caractérisé en ce que l'un des tubes (2) a sa partie supérieure mise en communication avec le bas seulement par un passage (5, 6) en forme de fente.

2. Bac de culture selon la revendication 1, caractérisé en ce que le fond (1) du bac s'étend entre les parais latérales montantes (3) et que le passage (5, 6) en forme de fente est formé dans le fond (1) du bac.

3. Bac de culture selon la revendication 1, caractérisé en ce que le passage (6) en forme de fente est défini par des bandes (7, 8) sensiblement horizontales qui sont connectées au parois opposées (3) du tube (2) respectif et qui sont formées de façon intégrale avec le bac.

4. Bac de culture selon la revendication 3, caractérisé en ce que l'une (7) des bandes fait partie du fond (1) du bac et que l'autre bande (8) se trouve à une faible distance au dessus de la surface du fond du bac (1).

5. Bac de culture selon la revendication 4, caractérisé en ce que les deux bandes (7, 8) se recouvrent.

6. Bac de culture selon la revendication 1, caractérisé en ce que le fond (1) du bac s'étend de l'une (3) des parois latérales montantes à l'autre parois altérale montante (3) et que le tube respectif (2) a sa partie supérieure mise en communication avec le bac seulement par des perforations dans ce fond (1) du bac.

7. Bac de culture selon la revendication 1, caractérisé en ce que le tube respectif (2) a sa partie supérieure couverte par une gaze.

fig.1

fig.2

fig.3

0 103 342